# EUROPEAN PATENT SPECIFICATION

(11) **EP 2 944 443 B1**
(45) Date of publication and mention of the grant of the patent: **08.07.2020**
(21) Application number: 13721358.3
(22) Date of filing: 11.01.2013
(51) Int. Cl.: B28B 13/02, C04B 26/06, C04B 26/14, C04B 26/18

(54) **PROCESS FOR OBTAINING A STRATIFIED AGGLOMERATED ARTIFICIAL STONE TILE AND/OR SLAB**
VERFAHREN ZUR HERSTELLUNG EINER GESCHICHTETEN AGGLOMERIERTEN KUNSTSTEINFLIESE UND/ODER PLATTE
PROCÉDÉ D'OBTENTION D'UN CARREAU ET/OU D'UNE DALLE EN PIERRE ARTIFICIELLE AGGLOMÉRÉE STRATIFIÉE

(43) Date of publication of application: 18.11.2015
(73) Proprietor: Cosentino Research and Development, S.L, 04850 Cantoria (Almería) (ES)
(72) Inventor: BENITO LÓPEZ, José Manuel, E-04850 Cantoria (Almería) (ES); GONZÁLEZ HERNÁNDEZ, Leopoldo, E-04850 Cantoria (Almeria) (ES); JARA GUERRERO, Juan Antonio, E-04850 Cantoria (Almería) (ES)
(74) Representative: Carlos Hernando, Borja
(86) International application number: PCT/ES2013/070006
(87) International publication number: WO 2014/108582

(56) References cited:
- EP-A2- 1 905 749
- WO-A1-89/11457
- WO-A2-2009/010406
- US-A- 3 670 060

## Description

### Technical part

The present invention relates to a process for obtaining those articles that include any kind of agglomerated artificial stone and polymerisable resin, such as tiles or slabs, to be used as construction material, characterised for consisting of different strati or veins, of heterogeneous variable paste that provide a special aesthetic effect similar to the natural stone products that have a nature consisting in different layers or veins, depending on their lithological composition. A stratified product is achieved, where the layers (that can be considered as big size veins); they have a width and length of grater dimensions than the products existing in the state of the art, exceeding the technical limitation in this sense. This makes the naturalness of the resulting product to be higher. The process to manufacture tiles or slabs made of agglomerated artificial stone of the present invention includes the controlled placing of the heterogeneous multi- mass strati in a manufacturing process of agglomerated artificial stone articles with the vacuum vibro-compression system. This controlled and not random placement of the layers is another factor that allows increasing the natural look of the products, making them different to the current, where the introduction of veins is uncontrolled and thus, it does not follow any ruled or controlled placement pattern.

The regular processes to manufacture artificial stone tiles or slabs include, in general, a crushing stage for the different materials with different granulometries to create the fillers; another stage that consists of the addition of the resin with the catalyser and, optionally, a colouring agent; the mix of such two previous stages until the homogenization of the materials with the resin; a later stage to model and compact the paste by a vacuum vibro-compression system; a hardening stage consisting in the polymerization reaction of the resin by heating; ending with a cooling, cutting and polishing stage.

Including at least two different paste mixing stages is the essential characteristic of the process described in the present invention. In each one of them, there are different petrous and artificial materials, in different proportions, compositions and granulometry, which mixed in their suitable stage that include the resin and other additives like, for example, a catalyser and, optionally, a colouring agent; they are distributed in a controlled manner and not randomly in the mould giving place, after the vacuum vibro-compression, hardening, cooling, cutting and polishing stage to a petrous agglomerated article such as a tile or slab made of artificial stone that has an heterogeneous multi-paste decorative effect which shows an aesthetic look similar to natural stone, with a greater layer effect than those vein effects achieved until now and described in the state of the art, thus surpassing the existing technical limitation.

### State of the art

Currently, petrous agglomerated articles are used as decorative surfaces in interior and exterior spaces, such as kitchen worktops, bathrooms, flooring, exterior staircases, etc., being an important condition for these products as these also provide good technical characteristics in that related to resistance, a look as close as possible to natural stone which design can be defined by different layered minerals, with different granulometries and varied colours.

Different techniques are already known to manufacture artificial stone articles that show an aesthetic effect similar to that of natural stone.

For example, in the ceramic sector, the document WO2005068146, owned by Sacmi, provide a plant to make tiles or ceramic slabs that include a mean to feed a mixture of powders which have different characteristics and colours to a hopper that has the shape of a rectangular box; this hopper has a loading opening and an unloading opening defined between the front and the back sides. Through the unload opening, place a strip of powder present in the hopper over an underlying moving reception surface which moves forward; this strip has the same width and thickness of the hopper unloading opening; compress the powder strip characterised because compacting takes place over the reception surface. The object of this plant is to provide with a method to manufacture tiles or ceramic slabs especially, but not exclusively, in a continuous cycle press.

Amongst others, the process marketed by Breton S.p.A (Italy) that developed the technology named "Breton Stone" and that is described in the patent US 4,698,010 (Marcello Toncelli, 6 October 1987) where aggregates of a material with variable particles are mixed with a binder (organic or inorganic), and after such mixture has been made homogeneous, it gets to a mould which is also moved inside a press where it is submitted to pressure and vibration on vacuum conditions, hardening the mix which results in blocks that can be cut into others of different dimensions.

The product placed in the market by the authors of the present application as Silestone®, consisting in a natural quartz agglomerate and bound with polyester resin, which is based on the patent ES 2 187 313, describes the process to manufacture artificial stone slabs made of a mix of crushed materials of different granulometries of silica, granite, quartz, ferrosilicon and/or other materials such as plastics, marble and metals, with liquid polyester resins by vacuum vibro-compression, heating, cooling and polishing, especially applicable to the use in interiors and decoration.

The writing authors have also developed some slabs similar to these previously described in that related to the fillers but that use as polymer resin only a liquid methacrylate resin, PCT/ES2005/000152, so the slabs resulting are more resistant to ultra-violet light that can be used in walls, staircases and decoration of exteriors without risk of deterioration that can be caused by the continuous exposure to sun rays.

In the above mentioned cases, the different look of the slabs is achieved depending on the composition and the granulometry of the products included as fillers, giving colour to different proportions of fillers with various colours and afterwards, making homogeneous all the fillers until achieving a more or less uniform colour.

In other cases, the processes designed imply the creation of the said "veins" thus imitating the natural stone.

EP1905749 describes a method of producing slabs of artificial stone and polymerisable resin having a veined effect. These veins are incorporated into the slabs by colorants introduced in liquid form or solid form during different steps of the process of manufacture of the slabs.

US 3670060 describes as well a method of manufacturing artificial marble which shows separate visible colour components, which are obtained by mixing separate portions of a single paste (ground stones and resin) with different colours or pigments. Thereafter these differently coloured portions of the same paste are placed in the desired manner into the moulds to be cured. The resulting product may have differently coloured layers, but made of the same filler paste.

WO 89/11457 describes the making of artificial stones from finely divided glass fragments and artificial resins and the use thereof for making reproductions of art objects, arts and crafts articles, packages for luxury goods, decorative articles of daily use, cover plates for electric switches and socket, for the interior decoration of residential, etc.

The process described in EP 0 970 790 is based in the use of a machine, object of the said patent, that first causes cavities in the surface of the mix that will build the slab, and later, such cavities are filled with the desired colorant.

Another method described in the patent application WO 03/027042 includes two alternatives depending if the binding product that builds the slab is of the "cement" kind or of the "polymer resin" using the powder pigment in the first case and the liquid pigment in the second. Once the base mix is made by a granulated material and a binding product, it is placed on a holder and it is sprayed on the surface with the liquid containing the pigment in a local and random manner so the patches or spots of a different colour appear without causing pigment agglomeration. Then, the mix is submitted to the compressing on vacuum vibro-compression stage and later to that of hardening, cooling, cutting and polishing. Another variation of the method consists in, that before or after adding the pigment solution, the surface of the mix is treated with an instrument like a rake that makes a wave movement so the colour mix is unevenly spread. The results of this treatment after having added the mix with the pigment is that the pigment patches or spots placed on the surface are distributed acquiring the desired vein effect.

In the application for international patent WO2009/010406 a process to manufacture tiles or slabs of artificial stone is described and it includes the basic stages of crushing of the different materials that made up the fillers with different granulometry, another stage that includes the resin and the catalyser and, optionally, the colour pigment, the mix of such stages until the homogenization of the materials with the resin, a stage of moulding and compressing of the paste got from the vacuum vibro-compression and a hardening stage by polymerization of the resin by heating, finishing with a cooling, cutting and polishing stage. The incorporation of veins that extend through the total thickness of the tile or slab, also acquires a tri-dimensional effect but its formation takes place by the incorporation of colouring agents to the surface of the paste in the mould, which are treated with a tool so they penetrate inside the paste and, like that, the vein acquires a tri-dimensional character.

In the patent US3318984 in favour of Christina Germain Louis Dussel, she makes reference to an artificial stone manufacturing process by the mix of thermosetting resins and mineral materials starting from the preparation of marble mixes or pastes of different colours sprayed together with a controlled mix of polyester resins. One of the pastes means the main portion of the artificial marble while the other or other pastes will be the spots or veins that will appear in the surface of the manufactured products. In such process the load of the different pastes is made loading by hand the different materials to the mould or by the use of a feeding mechanism with pre-defined settings, which will allow manufacturing elements with different colours in a single operation.

The application of the international patent WO2006/134179 presented by the holder of the present invention, describes a process for the manufacturing of artificial stone with polymerisable resin with a tri-dimensional vein effect by a vacuum vibro-compression system, achieving such vein effect by the addition of liquid or solid colouring mixed with the resin and added either at the mixing stage in upper mixers or in the inside of the homogenization ring either in the belt that carries the feeding mechanism or even inside it. The vein can be added in parts of the process where a later mix is made so the vein spreads throughout the entire tile.

However, with the methods mentioned in the state of the art simulations of the natural stone are achieved where the artificial character is still kept because the formation of veins is made by colouring always with pigmented resin that makes a greater difference between the veins and the rest of the product. Also, such veins have a width, length and situation in the product that makes that their similarity to natural stone is not completely satisfactory.

Especially, the great technical limitation is in the fact that, when creating the vein by liquid stages or solid pigments, the width that can be achieved of this is always very small (maximum 10 mm), so the stratified effects of certain natural stones cannot be achieved.

Also, a sufficient length of the veins cannot be achieved and the maximum length achieved in the state of the art is of circa 100 mm. In addition, in all the cases, these veins are placed in a randomly position in the mix, and sometimes areas of great concentration can be found and others, on the contrary, almost without veins.

All these technical limitations are translated, in most of the cases, in obtaining a product that keeps a certain artificial degree, being far from what natural stones are.

The technical limitation related to a predetermined width and length is mainly due to the loss of mechanical properties of the material in the vein area, due to the use in the composition of the vein of a larger amount of resin which necessary involves that the technical details of the product in these areas, such as hardness, resistance to UV light, shine, etc. are below the rest.

So, a manufacturing process for stratified artificial stone articles by vacuum vibro-compression technology that includes to the regular process the creation of, at least, two pastes or heterogeneous pastes of petrous agglomerated material of different granulometry is the object of the present invention. These pastes are placed in a controlled manner over the compacting mould and, after the compacting stage by vacuum vibro-compression, hardening and finishing, they will become the artificial stone article of the present invention that have in its total structure the same technical properties.

By this system of application of layers by the creation of different pastes the dimensions of the current veins, reaching a stratum width from 10mm to 3400 mm preferably 500 mm and lengths that could cross the product in length and width, being the limit of length the dimension of the tile, as it can be 3400 mm, preferably 1700 mm. These strati (or large size veins), together with the location control of the said, make that the naturalness of the product is elevated, being difficult to know if it is an artificial or natural product.

The artificial stone articles obtainable according to the process of the present invention are apt for interiors and exterior decoration in walls, floors, staircases, etc. with a similar design to that of natural stone, created by tri-dimensional stratus of agglomerated paste or mass of artificial stone with controlled composition, thickness and weight which manage to overcome the disadvantages of the veining products such as the small dimension of the width and length of the vein, the conservation still of a certain character due to the use of one with a high content of resin and to the fact of not being able to achieve the stratified effects in a controlled manner.

### Explanation of the invention

The present invention is directed to a process for obtaining a stratified agglomerated artificial stone tile and/or slab, consisting of different strati made of pastes of different petrous and artificial materials in different proportions, compositions and granulometry characterised in that it comprises the following steps:
a) Crushing step of the different materials with varied granulometry making up the fillers;
b) Obtaining of the additivated resin by the addition and mix of the resin with the catalyser, the accelerant, the binding material and, optionally the colouring agent;
c) Mix of the products of the steps a) and b) until the homogenization to achieve the paste for a stratus in the final product.
d) Independently repeating the process steps a to c to obtain different pastes as many times as number of different strati are to be achieved in the final product.
e) Transportation of the different pastes by a conveyor belt to the feeding or distribution mechanism.
f) Download of the pastes placed in an ordered manner, in the previous stage, from the distributor to the compressing mould that creates the design and dimension of the slab.
g) Protecting the pastes that make up the slabs with Kraft-type paper, or an elastomer, similar to a rubber coating
h) Moulding and pressing of the pastes in each mould by vacuum vibro-compression;
i) Hardening by polymerization of the resin by heating;
j) Finish with a cooling, sizing, polishing and cutting stage:
The process designed in the present invention is different to the processes known in the state of the art in the actions carried out during the stages c), d) and e).
During stage c), at least two pastes or masses of different composition are achieved (different granulometry, pigmentation, etc.) which will become the different strati of the stratified artificial stone product. On the contrary, the processes known in the state of the art only include the creation of a single paste with a single composition to create the final product, due to the later processes of mixing and homogenization.
During stage e) the different strati, with different composition, are transported in a conveyor belt from the mixers to the feeding or distributing mechanism, where they are placed or deposited on the said, in a certain order, to create the final desired product. On the contrary, the processes known of the state of the art do not include the controlled, ordered and stratified placement of the veins that are part of the product in the distributor or feeding mechanism.
At last, stage f) makes reference to the controlled directed and non-directed download of the strati placed in an ordered manner and present in the feeding mechanism or distributor to the mould.
On the contrary, the processes of the state of the art do not include the download of the different strati already placed in an ordered manner in the feeding mechanism directly to the mould.

### Description of the drawings

Drawing 1 represents a cross-wise cut of the feeding mechanism with a certain distribution of the different strati according to the present invention.
Drawing 2 represents the effect achieved in the final product from the distribution of the strati of drawing 1.

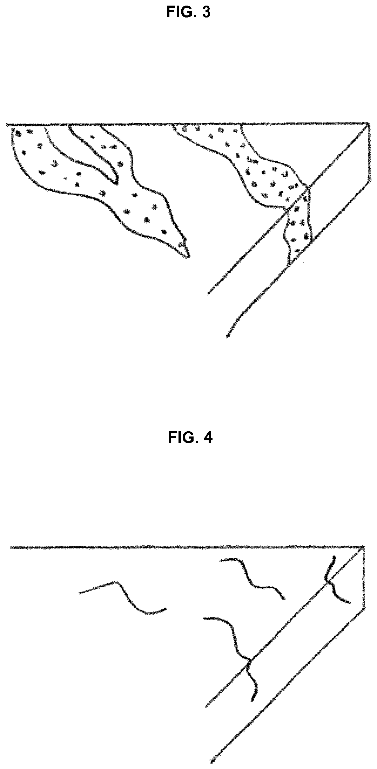

Drawing 3 represents another design of the stratified article where there are different granulometries in the different strati.
Drawing 4 represents a slab with vein effect according to the state of the art.

### Detailed description and preferred performance method of the invention.

The goal of the present invention is, then, the achievement of a stratified agglomerated product that is capable of overcoming the technical limitations in that related to the width and length of the veins in the products currently known in the state of the art and to its controlled disposition in the core of the product. When increasing the dimension of the veins, a stratified effect is achieved in the final product which has an even more natural look.

So, object of the present invention is a process for obtaining articles such as tiles and/or slabs made of artificial stone that have veins built by strati of different pastes, these being created by fillers of different granulometry and the corresponding polymerisable resin and also additives, characterised because the veins present a width from 10 to 3400 mm, preferably, 500 mm, and length from 100 to 3400 mm, preferably, 1700 mm.

To the effects of the present invention, the use of natural and artificial materials of variable granulometry is considered which will be part of the fillers, amongst others: marble, dolomite, opaque quartz, clear quartz, silica, crystal, mirror, cristobalite, granite, albite, basalt, ferrosilicon, etc. It also considers the use of other filler materials such as: colour plastics, metals, woods, graphite, etc. The said materials are part of the different strati, preferably with the following composition and granulometry:
- 10% to 70% of micronized filler, with a granulometry between 0.0001 mm to 0.75mm;
- 0% to 80% of crushed fillers, named "crushed 1", with a granulometry between 0.76mm and 1.20mm; and optionally,
- 0% to 50% of crushed fillers, named "crushed 2" with a granulometry between 1.21 mm and 15mm.

The proportions of the different fillers are calculated in % of weight over the total weight that includes the fillers and the resin in the stratus.

The percentage of each granulometry in each stratus depends of the design of the slab to be achieved, modifying such percentages depending on the final result to be achieved.

The resin that is part of the paste is preferably unsaturated polyester resin; even if it also considers the use of other polymerisable and thermosetting resins such as: methacrylate resin, epoxy, unsaturated polyester, vinyl, etc.

The resin is part of the total mix of each stratus in a percentage between a 6% and a 30% of weight, being the percentage selection preferably between 7 and 20%.

Other additives that are part of the fillers are the catalyser, the accelerant, the binding product and, optionally, the colouring agent.

So, the process of the present invention, designed to get the stratified artificial stone products consists of the following stages:
a) Crushing step of the different materials with varied granulometry making up the fillers;
b) Obtaining of the additivated resin by the addition and mix of the resin with the catalyser, the accelerant, the binding material and, optionally the colouring agent;
c) Mix of the products of the steps a) and b) until the homogenization to achieve the paste for a stratus in the final product.
d) Independently repeating the process steps a to c to obtain different pastes as many times as number of different strati are to be achieved in the final product.
e) Transportation of the different pastes by a conveyor belt to the feeding or distribution mechanism.
f) Download of the pastes placed in an ordered manner, in the previous stage, from the distributor to the compressing mould that creates the design and dimension of the slab.
g) Protecting the pastes that make up the slabs with Kraft-type paper, or an elastomer, similar to a rubber coating
h) Moulding and pressing of the pastes in each mould by vacuum vibro-compression;
i) Hardening by polymerization of the resin by heating;
j) Finish with a cooling, sizing, polishing and cutting stage:

The process starts with the stage a) where the starting material is prepared being crushed until achieving the desired granulometry, mixing the different percentages of each granulometry and then downloading it in the planetary mixers.

The preparation of different compositions of fillers with variable granulometry, which will be, in the end, the different homogenised pastes that are part of the strati of the final product is considered. In general, and for the creation of the products included in the present invention, at least two different compositions of pastes with fillers of variable granulometry have to be prepared, even if, pending on the final product to be achieved, the preparation of up to 20 different compositions of pastes with fillers of different granulometry is considered.

These different fillers are distributed in different mixers with the possibility that each one of them receives the optional addition of a solid colouring agent or pigment.

If the colouring agent is liquid, it is added in the resin stage.

In the stage b) the preparation of the additivated resin is made with the catalyser and the accelerant. This catalyzer can be any that creates free radicals, known from the state of the art. The peroxides and peroxidicarbonates are those preferred. They can be presented in powder (for example, dilauryl perioxide or di-(4-ter-butil-ciclohexile) peroxi-di-carbonate or a mixture of both, or liquid (for example, tert-butyl perbenzoate or tert-butyl peroxi-2-ethyilhexanoate or a mixture of both).

The accelerant can be a cobalt composed derived from caprylic acid, for example, cobalt octoate at 6%, a binding product and optionally the colouring agent.

The proportion of this resin in the composition of each paste shall be established by the composition of each stratus, being the resin percentage between a 6% and a 30% in weight, being, preferably, the selection of a percentage of between 7 and 20%.

The stage c), means, as previously stated, obtaining different pastes or strati which are independently prepared in each mixer and always avoiding a later homogenization existing in the regular processes.

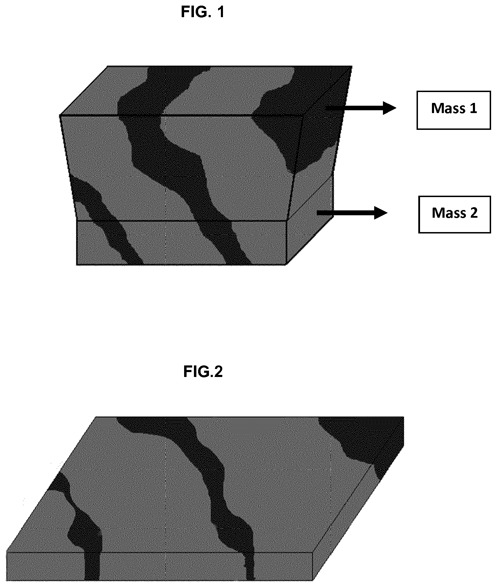

During stage e) the different strati are transported in a conveyor belt from the mixers to the feeding or distributing mechanism, where they are placed or deposited, in a certain order, sequence or amount desired. If drawing 1 is checked, where two different strati have been prepared (paste 1 and paste 2), these have been downloaded on the feeding system following this frequency: paste 2, paste 1, paste 2, paste 1, paste 2 and paste 1.

Considering performing a controlled download of the strati in the feeding or distribution mechanism in an ordered manner with the volume and amounts desired, the device includes weighting means, such as, belts or hoppers which allow defining and controlling the amount of paste that will create a stratus in the final product.

Additionally, the device includes means that allow performing a download in movement of the different pastes in the feeding or distribution mechanism in a way that the speed and trajectory of the movement can be controlled to achieve a design of each stratus in the final product. As the paste download is continuous, and thanks to the fact that the movement of the feeding system can be controlled, the strati can be downloaded in a heterogeneous and controlled manner. This is, the closer the feeding system gets to the stratus downloading area, more paste is downloaded and, as it moves further away, the amount is reduced. This swinging movement of the feeding system will allow drawing a strati design like that shown in the example in Drawing 1 where a certain tilt has been included in the strati setting in the feeding system. The combination of the weighting and movement means allows controlling the strati dimensions, for example, width, length, shape, etc. in the final product.

Next, in stage f), the groups of strati made and present in the feeding mechanism are downloaded so they will be distributed along the pressed mould to achieve a stratified final product in all the dimensions of the slab, this is, visible strati both in the upper and lower surface, as in the laterals. The download over the mould can be made in two different ways:
1. By a belt over where the strati coming from the feeding system have been downloaded.
2. Directly placing the exit of the feeding system over the mould and downloading the stratus from the conveyor belt directly to the mould.

Once the strati are distributed in the mould stages g), h) and i) take place which are regular and known for the state of the art.

So, the mould with the strati is protected with a paper or rubber. Once the mixture is protected and placed in the mould, it is taken to a vacuum vibro-compression press, which is in charge of squeezing and compressing the material but first it has to pass by a vacuum and then the material is squeezed by vibro-compression, following the method designed and described by the Italian company Breton SPA., as described in the patent US 4,698,010.

The pressed tile is driven to an oven that is at a temperature between 80° C and 110° C for the resin to polymerise. The time of stay of each slab in the oven is from 30 to 60 minutes.

Once outside the oven, the slab is cooled for about 24 hours at room temperature in order to, later, calibrate, polish and cut it.

As final results, there is a slab with a stratified effect existing in all of its dimensions where the strati (which can be considered as big size veins) have a width and length of greater dimensions than the products existing in the state of the art. Thus, the final design is going to depend both of the shape, colour and granulometry of the materials that create the pastes or strati, as of the design provided with the different systems described in the present invention, achieving a petrous agglomerate with a more natural look, with more movement, more depth and a controlled stratified effects in all the dimensions of the product.

### Examples

### Example 1

Crushing in mills of the starting material until achieving the desired granulometry to finally get the filler material with the following granulometry distribution:
- Crushed filler 1 of granulometry between 0.76-1.2 mm
- Crushed filler 2 of granulometry between 1.21-15 mm
- Micronized filler of granulometry between 0.05-0.75 mm

Now the crushed filler 1 and micronized filler are added to a planetary mixer where they are mixed with the resin, the catalyser, the accelerant and the colouring agent, in the following proportions to build paste 1:
69% crushed filler 1, 20 % micronized filler, 11 % resin, (% calculated over the total weight of the fillers and resin mixture)
0,2% of accelerant in proportion to the resin amount
2% of binding material in proportion to the resin amount
2% of catalyser in proportion to the resin amount
4% of black colouring agent in proportion to the resin amount

Mixture starts until homogenization and obtaining the first paste which will be transported by a conveyor belt to the feeding mechanism.

Simultaneously, the crushed filler 1, crushed filler 2 and micronized filler are added in a planetary mixer where the catalyser, the accelerant, the binding and the colouring agent are mixed with the resin in the following proportions to achieve paste 2.
34% crushed filler 1, 40 % crushed filler 2, 17 % micronized filler, 9 % resin, (% calculated over the total weight of the fillers and resin mixture)
0,2% of accelerant in proportion to the resin amount
2% of binding material in proportion to the resin amount
2% of catalyser in proportion to the resin amount
4% of white colouring agent in proportion to the resin amount

Mixture starts until homogenization and obtaining the second paste which will be transported by a conveyor belt to the feeding mechanism.

The download of the pastes in the feeding or distributor mechanism is made in a controlled and ordered manner and with the following sequence:
First, 15 Kg paste 2; second, 10 Kg paste 1; third, 30 Kg paste 2; fourth,15 Kg paste 1; fifth, 25 Kg paste 2 and finally, 5 Kg paste 1.

This is, in this case, a thin tile with a total paste of 100 kg will be created being the total distribution of the two different pastes in the final tile this following: 70 % of paste 2 and 30 % of paste 1.

Then the controlled download of the strati takes place, according to the previous stage, from the feeding mechanism to the mould and then moulding, compressing, hardening, and finishing treatment to the product with the most used techniques in the state of art.

## Claims

1. Process for obtaining a stratified agglomerated artificial stone tile and/or slab, consisting of different strati made of pastes of different petrous and artificial materials in different proportions, compositions and granulometry **characterised in that** it comprises the following steps:
a) Crushing step of the different materials with varied granulometry making up the fillers;
b) Obtaining of the additivated resin by the addition and mix of the resin with the catalyser, the accelerant, the binding material and, optionally the colouring agent;
c) Mix of the products of the steps a) and b) until the homogenization to achieve the paste for a stratus in the final product.
d) Independently repeating the process steps a to c to obtain different pastes as many times as number of different strati are to be achieved in the final product.
e) Transportation of the different pastes by a conveyor belt to the feeding or distribution mechanism.
f) Download of the pastes placed in an ordered manner, in the previous stage, from the distributor to the compressing mould that creates the design and dimension of the slab.
g) Protecting the pastes that make up the slabs with Kraft-type paper, or an elastomer, similar to a rubber coating
h) Moulding and pressing of the pastes in each mould by vacuum vibro-compression;
i) Hardening by polymerization of the resin by heating;
j) Finish with a cooling, sizing, polishing and cutting stage:

2. Process according to claim 1, **characterised in that** step d) is repeated independently up to a total of 20 times depending on the number of pastes that are to be included in the final product to be achieved.

3. Process according to claims 1 and 2, **characterised in that** step e) consists of the ordered and independent placing of the different pastes in the conveyor belt and the ordered and independent download of the pastes in the desired amount in the feeding or distribution mechanism.

4. Process according to claims 1 to 3, characterised because the stage f) is made by a belt where the pastes coming from the feeding systems have been downloaded or directly supporting the exit of the feeding system over the compressing mould and downloading the group of pastes from the conveyor belt directly to the mould.

5. Process according to any preceding claim, wherein following the hardening step, the stratified artificial stone tile and/or slab has strati with widths of between 10 to 3400 mm and lengths from 100 to 3400 mm.

6. Process according to any preceding claim, wherein the materials of step a) are natural and artificial materials of variable granulometry selected from the group consisting of: marble, dolomite, opaque quartz, clear quartz, silica, crystal, mirror, cristobalite, granite, albite, basalt, ferrosilicon, colour plastics, metals, woods and graphite.

7. Process according to claim 6, wherein the composition and granulometry of materials of step a) in the different strati, when calculated in % of weight over the total weight of the pastes, is:
- from 10% to 70% of micronized filler, with a granulometry between 0.0001 mm to 0.75 mm;
- from 0% to 80% of crushed fillers, with a granulometry between 0.76 mm and 1.20 mm; and optionally,
- from 0% to 50% of crushed fillers with a granulometry between 1.21 and 15 mm.

8. Process according to any preceding claim, wherein the resin used in step b) is selected from the group consisting of: unsaturated polyester resin, methacrylate resin, epoxy and vinyl.

9. Process according to claim 8 wherein the resin is present in each strati in an amount between 6% to 30% with respect to the total weight of the paste.

## Patentansprüche

1. Verfahren zur Herstellung einer geschichteten, agglomerierten Kunststeinfliese und/oder -platte, zusammengesetzt aus verschiedenen Schichten, die aus Pasten verschiedener steinbasierter und künstlicher Materialien in unterschiedlichen Proportionen, Zusammensetzungen und Korngrößen bestehen, **dadurch gekennzeichnet, dass** es die folgenden Schritte umfasst:
a) Schritt des Zerkleinerns der verschiedenen Materialien mit unterschiedlicher Korngröße zur Bildung der Füllstoffe;
b) Herstellung des Additivharzes durch Zugabe und Vermischen des Harzes mit dem Katalysator, dem Beschleuniger, dem Bindemittel und wahlweise dem Farbstoff;
c) Mischen der Produkte der Schritte a) und b) bis hin zur Homogenisierung zur Gewinnung der Paste für eine Schicht im Endprodukt.
d) Separates Wiederholen der Verfahrensschritte a bis c zur Herstellung verschiedener Pasten entsprechend der Anzahl der im Endprodukt zu erzielenden Schichten.
e) Transport der verschiedenen Pasten über ein Förderband zum Zuführ- oder Verteilmechanismus.
f) Übergabe der im vorangegangenen Schritt in geordneter Weise platzierten Pasten vom Verteiler in die Pressform, welche Form und Abmessungen der Platte bestimmt.
g) Schützen der die Platten bildenden Pasten mit Kraftpapier oder einem Elastomer, ähnlich einer Gummibeschicht
h) Formen und Verpressen der Pasten durch Vakuum-Vibrationsverdichtung in den einzelnen Formen;
i) Polymerisationshärten des Harzes durch Erhitzen;
j) Endbearbeitung in Form eines Kühl-, Bemaßungs-, Schleif- und Schneidschritts:

2. Verfahren nach Anspruch 1, **dadurch gekennzeichnet, dass** Schritt d) bis zu insgesamt 20 Mal entsprechend der im zu erzielenden Endprodukt einzubringenden Anzahl von Pasten separat wiederholt wird.

3. Verfahren nach Anspruch 1 und 2, **dadurch gekennzeichnet, dass** Schritt e) aus dem geordneten und separaten Platzieren der verschiedenen Pasten auf dem Förderband sowie der geordneten und separaten Übergabe der Pasten in der gewünschten Menge in den Zuführ- oder Verteilmechanismus besteht.

4. Verfahren nach den Ansprüchen 1 bis 3, **dadurch gekennzeichnet, dass** Schritt f) durch ein Band erfolgt, an das die von den Zuführsystemen kommenden Pasten übergeben wurden, oder das direkt den Austritt aus dem Zuführsystem über die Pressform unterstützt und die Gruppe von Pasten vom Förderband direkt in die Form übergibt.

5. Verfahren nach einem der vorstehenden Ansprüche, wobei die geschichtete Kunststeinfliese und/oder -platte nach dem Härtungsschritt Schichten mit einer Breite von 10 bis 3400 mm und einer Länge von 100 bis 3400 mm aufweist.

6. Verfahren nach einem der vorstehenden Ansprüche, wobei die Materialien von Schritt a) natürliche und künstliche Materialien mit unterschiedlicher Korngröße sind, ausgewählt aus der Gruppe bestehend aus: Marmor, Dolomit, opakem Quarz, transparentem Quarz, Siliciumdioxid, Kristall, Spiegel, Cristobalit, Granit, Albit, Basalt, Ferrosilicium, Farbkunststoffen, Metallen, Hölzern und Graphit.

7. Verfahren nach Anspruch 6, wobei die Zusammensetzung und Korngröße der Materialien von Schritt a) in den verschiedenen Schichten, berechnet in Gew.-% des Pasten-Gesamtgewichts, beträgt:
- 10 % bis 70 % mikronisierter Füllstoff mit einer Korngröße zwischen 0,0001 mm und 0,75 mm;
- 0 % bis 80 % zerkleinerte Füllstoffe mit einer Korngröße zwischen 0,76 mm und 1,20 mm; und wahlweise,
- 0 % bis 50 % zerkleinerte Füllstoffe mit einer Korngröße zwischen 1,21 und 15 mm.

8. Verfahren nach einem der vorstehenden Ansprüche, wobei das in Schritt b) verwendete Harz ausgewählt ist aus der Gruppe bestehend aus: ungesättigtem Polyesterharz, Methacrylatharz, Epoxid und Vinyl.

9. Verfahren nach Anspruch 8, bei dem in jeder Schicht Harz in einer Menge zwischen 6 % und 30 % des Pasten-Gesamtgewichts vorhanden ist.

## Revendications

1. Procédé d'obtention d'un carreau et/ou d'une dalle en pierre artificielle agglomérée stratifiée, constituée de différentes strates faites de pâtes de différents matériaux pétreux et artificiels dans des proportions, des compositions et une granulométrie différentes, **caractérisé en ce qu'**il comprend les étapes suivantes :
a) Étape de broyage des différents matériaux de granulométrie variable constituant les charges :
b) Obtention de la résine additivée par l'addition et le mélange de la résine avec le catalyseur, l'accélérateur, le liant et, éventuellement, le colorant ;
c) Mélange des produits des étapes a) et b) jusqu'à l'homogénéisation pour obtenir la pâte pour un stratus dans le produit final.
d) Répéter indépendamment les étapes a à c du processus pour obtenir des pâtes différentes autant de fois que le nombre de strates différentes doit être atteint dans le produit final.
e) Transport des différentes pâtes par un convoyeur à bande vers le mécanisme d'alimentation ou de distribution.
f) Téléchargement des pâtes placées de manière ordonnée, dans l'étape précédente, du distributeur vers le moule de compression qui crée la conception et la dimension de la dalle.
g) Protection des pâtes qui composent les dalles avec du papier de type Kraft, ou un élastomère, similaire à un revêtement en caoutchouc
h) Moulage et pressage des pâtes dans chaque moule par vibro-compression sous vide ;
i) Durcissement par polymérisation de la résine par chauffage ;
j) Terminer par une étape de refroidissement, d'encollage, de polissage et de découpe :

2. Procédé selon la revendication 1, **caractérisé en ce que** l'étape d) est répétée indépendamment jusqu'à un total de 20 fois en fonction du nombre de pâtes qui doivent être incluses dans le produit final à obtenir.

3. Procédé selon les revendications 1 et 2, **caractérisé en ce que** l'étape e) consiste à placer de manière ordonnée et indépendante les différentes pâtes dans le convoyeur à bande et à décharger de manière ordonnée et indépendante les pâtes dans la quantité souhaitée dans le mécanisme d'alimentation ou de distribution.

4. Procédé selon les revendications 1 à 3, **caractérisé en ce que** l'étape f) est réalisée par une courroie où les pâtes provenant des systèmes d'alimentation ont été téléchargées ou supportant directement la sortie du système d'alimentation au-dessus du moule de compression et téléchargeant le groupe de pâtes du convoyeur à bande directement dans le moule.

5. Procédé selon l'une quelconque des revendications précédentes, dans lequel, après l'étape de durcissement, le carreau et/ou la dalle en pierre artificielle stratifiée présente des strates d'une largeur comprise entre 10 et 3400 mm et d'une longueur comprise entre 100 et 3400 mm.

6. Procédé selon l'une quelconque des revendications précédentes, dans lequel les matériaux de l'étape a) sont des matériaux naturels et artificiels de granulométrie variable choisis dans le groupe constitué par : le marbre, la dolomie, le quartz opaque, le quartz clair, la silice, le cristal, le miroir, la cristobalite, le granit, l'albite, le basalte, le ferrosilicium, les plastiques colorés, les métaux, les bois et le graphite.

7. Procédé selon la revendication 6, dans lequel la composition et la granulométrie des matériaux de l'étape a) dans les différentes strates, lorsqu'elles sont calculées en % du poids par rapport au poids total des pâtes, est :
- de 10 % à 70 % de charge micronisée, avec une granulométrie comprise entre 0,0001 mm et 0,75 mm :
- de 0 à 80 % de charges broyées, avec une granulométrie comprise entre 0,76 mm et 1,20 mm ; et éventuellement
- de 0% à 50% de charges broyées d'une granulométrie comprise entre 1,21 et 15 mm.

8. Procédé selon l'une quelconque des revendications précédentes, dans lequel la résine utilisée à l'étape b) est choisie dans le groupe constitué par : la résine de polyester insaturé, la résine de méthacrylate, l'époxy et le vinyle.

9. Procédé selon la revendication 8, dans lequel la résine est présente dans chaque strate dans une quantité comprise entre 6 % et 30 % par rapport au poids total de la pâte.
